# EUROPEAN PATENT APPLICATION

(11) **EP 2 015 381 A2**
(43) Date of publication of application: **14.01.2009**
(21) Application number: 08157843.7
(22) Date of filing: 09.06.2008
(51) Int. Cl.: H01M 2/10

(54) **Cordless power tool system**

(30) Priority: 11.06.2007 US 943240 P; 17.01.2008 US 15958
(71) Applicant: Black & Decker Inc., Newark, Delaware 19711 (US)
(72) Inventor: Murray, Christopher, Baltimore, MD 21230 (US); Turner, Terry L, Towson, MD 21204 (US); Andrus, Tracine, Baltimore, MD 21211 (US); Cooper, Vincent P, Durham City, Durham DH1 4DF (GB); Matson, Lyle, Shrewsbury, PA 17361 (US); Murray, Thomas, Baltimore, MD 21202 (US); O'Hern, Adam, Cambridge, MD 02140 (US); Cannaliato, Michael, Bel Air, MD 21014 (US); Baskar, Ashok, Lutherville, MD 21093 (US); Kaye, Thomas, Fallston, MD 21047 (US); Shaver, David M., Brockville Ontario K6V 3A5 (CA)
(74) Representative: Bell, Ian Stephen

(57) **Abstract**

A battery pack with a housing, at least one battery cell contained within the housing, a first terminal and a second terminal. The housing includes a substantially ovoidal surface which is substantially symmetric about a first axis of symmetry and a second axis of symmetry which is transverse to the first axis. The surface has first and second substantially linear terminal openings. The first opening extends substantially parallel to and is non-coincident with the first axis, while the second opening extends substantially parallel to the second axis. The first and second terminals are disposed within the housing adjacent to the surface. The first terminal is accessible through first opening and the second terminal is accessible through the second opening. A device for using the battery pack is also provided.

## Description

The present invention generally relates to a system of cordless tools and more particularly to a system of cordless tools having a battery pack that is well suited for use with tools having relatively large housings that include a handle, as well as for use with tools having relatively small housings where the battery pack is employed as a handle.

Typical cordless tool systems employ a battery pack that can be removably coupled to a plurality of different tools. These tools typically include drills and saws that employ fairly substantial housings that include a handle that may be grasped by the hand of the user to manipulate and operate the tool. Moreover, the housings of such tools can be configured to prevent insertion of the battery pack in a wrong orientation.

The inventors of the present invention have devised a modular cordless tool system in which one or more battery packs may be removably coupled to a tool having a substantial housing (i.e., a housing that includes a handle) as well as to a tool having an insubstantial housing (i.e., a housing without a handle). For this latter type of tool, the present inventors have found it desirable that the battery pack itself form the handle or base and that the battery pack can have an approximately ovoidal cylindrical shape that can fit comfortable into the hand of the user, despite the size of the user's hand or whether the user is left- or right-handed.

As modern battery packs can employ several terminals (e.g., a positive terminal, a negative terminal, a thermistor terminal), it was desirable to provide a battery pack with a housing that was substantially symmetric about its longitudinal axis so that it could be employed as a comfortable ambidextrous handle but which would protect the terminals of the battery pack and/or the tool if the user attempted to insert the battery pack into the tool in the wrong orientation.

In one form, the present invention provides a battery pack that includes a housing, at least one battery cell contained within the housing, a first terminal and a second terminal. The housing preferably includes a substantially ovoidal surface which is substantially symmetric about a first axis of symmetry and a second axis of symmetry which is transverse to the first axis. The surface preferably has first and second substantially linear terminal openings. Preferably, the first opening extends substantially parallel to and is non-coincident with the first axis, while the second opening preferably extends substantially parallel to the second axis. The first and second terminals preferably are disposed within the housing adjacent to the surface. The first terminal preferably is accessible through the first opening and the second terminal preferably is accessible through the second opening.

Preferably, said first axis comprises a major axis and said second axis comprises a minor axis. Said second opening preferably extends non-coincidental to said minor axis. Said first axis preferably comprises a minor axis and said second axis preferably comprises a major axis. The ovoidal surface preferably comprises a rounded rectangle. Alternatively, the ovoidal surface preferably comprises an oval. Advantageously, said surface may have a lockout opening, wherein said lockout opening is not intersected by at least one of said first axis and said second axis. Said housing may extend in a longitudinal direction which is substantially perpendicular to said surface and may have an ovoidal cross-sectional shape for at least a portion of its dimension in the longitudinal direction. Said housing may extend in a longitudinal direction which is substantially perpendicular to said surface and may have an ovoidal cross-sectional shape for substantially its entire dimension in the longitudinal direction.

In another form, the invention provides a battery pack that includes a housing, at least one battery cell contained with the housing, first and second terminal openings, first and second terminals and a lock-out opening. The housing preferably has a substantially ovoidal cross-section that extends in a longitudinal dimension, and preferably a substantially flat forward surface. The forward surface preferably is substantially symmetric about a first axis of symmetry and a second axis of symmetry that is transverse to the first axis. The first and second terminal openings preferably extend through the forward surface. The first terminal and a second terminal preferably are disposed within the housing adjacent to the surface. The first terminal preferably is accessible through the first opening and the second terminal preferably is accessible through the second opening. The lockout opening preferably extends through the surface. The lockout opening preferably does not intersect at least one of said first axis and said second axis. Said ovoidal cross-section may comprise a rounded rectangle. Alternatively, said ovoidal cross-section may comprise an oval. Said housing may include a raised collar disposed about said forward flat surface and having a corresponding shape. Said lockout opening preferably does not intersect both said first axis and said second axis.

In still another form, the invention provides an electrical device for use with a battery pack having a housing with a forward surface having a substantially ovoidal cross-section which is substantially symmetric about a first axis of symmetry and a second axis of symmetry, first and second terminal openings extending through the forward surface and a first terminal and a second terminal disposed within the housing and accessible through the first and second openings, respectively. The device preferably includes a pack receiving cavity and a pair of terminal blades. The pack-receiving cavity preferably has a substantially ovoidal cross-section that substantially corresponds to the forward surface of the pack with a first axis of symmetry and a second axis of symmetry. The terminal blades preferably are disposed in the cavity such that the first blade extends substantially parallel to and non-coincidental with the first axis and the second blade parallel to the second axis. Said first axis may comprise a major axis and said second axis may comprise a minor axis, said second blade extending non-coincidental to said minor axis. Said first axis may comprise a minor axis and said second axis may comprise a major axis, said second blade extending non-coincidental to said major axis. Said device may be a battery charger or a power tool, for example. Said ovoidal cross-section may comprise a rounded rectangle. Alternatively, said ovoidal cross-section may comprise an oval.

In yet another form, the invention provides an electrical device for use with a battery pack having a housing with a forward surface having a substantially ovoidal cross-section which is substantially symmetric about a first axis of symmetry and a second axis of symmetry, first and second terminal openings extending through the forward surface and a first terminal and a second terminal disposed within the housing and accessible through the first and second openings, respectively, and a lock out opening disposed through the surface. The device preferably comprises a pack receiving cavity, a pair of terminal blades and a lock-out projection. The pack-receiving cavity preferably has a substantially ovoidal cross-section substantially corresponding to the forward surface of the pack with a first axis of symmetry and a second axis of symmetry. The pack-receiving cavity preferably extends in a longitudinal direction. The terminal blades preferably are disposed in the cavity and extend along the longitudinal direction. The lockout projection preferably extends along the longitudinal direction for a distance greater than the extent of the blades. Preferably, at least one of the first axis and the second axis does not intersect the lockout projection. Said ovoidal cross-section may comprise a rounded rectangle. Alternatively, said ovoidal cross-section may comprise an oval. Advantageously, both said first axis and said second axis do not intersect said lockout projection. Said device may be a battery charger or a power tool, for example.

It is to be understood that any feature of any aspect of the invention may be a feature of any other aspect of the invention.

Further areas of applicability will become apparent from the description provided herein. It should be understood that the description and specific examples are intended for purposes of illustration only and are not intended to limit the scope of the present disclosure.

The invention will now be described, by way of example, with reference to the accompanying drawings.
Figure 1 is a perspective view of a system of cordless tools constructed in accordance with the teachings of the present disclosure;
Figure 2 is a perspective view of a portion of the system of cordless power tools of Figure 1, illustrating the battery pack in more detail;
Figure 3 is a longitudinal sectional view of the battery pack;
Figure 4 is an end view of battery pack;
Figure 5 is partially broken-away perspective view of a portion of the system of cordless tools of Figure 1, illustrating a portion of the first tool in more detail;
Figure 6 is a section view of a portion of the first tool, illustrating the a first end of a battery connection portion;
Figure 7 is a section view of a portion of the first tool, illustrating an opposite end of the battery connection portion with the battery pack coupled thereto;
Figure 8 is a side elevation view of a portion of the system of cordless tools of Figure 1, illustrating the battery pack as coupled to a second tool; and
Figure 9 is a bottom plan view of the second tool.

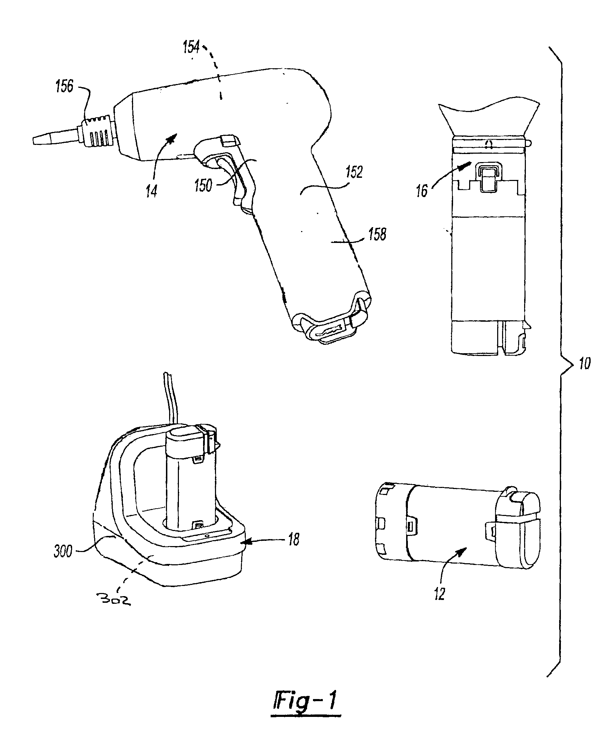

With reference to Figure 1 of the drawings, a system of cordless power tools constructed in accordance with the teachings of the present invention is generally indicated by reference numeral 10. The system 10 can include a battery pack 12, a first tool 14, a second tool 16, and a battery charger 18.

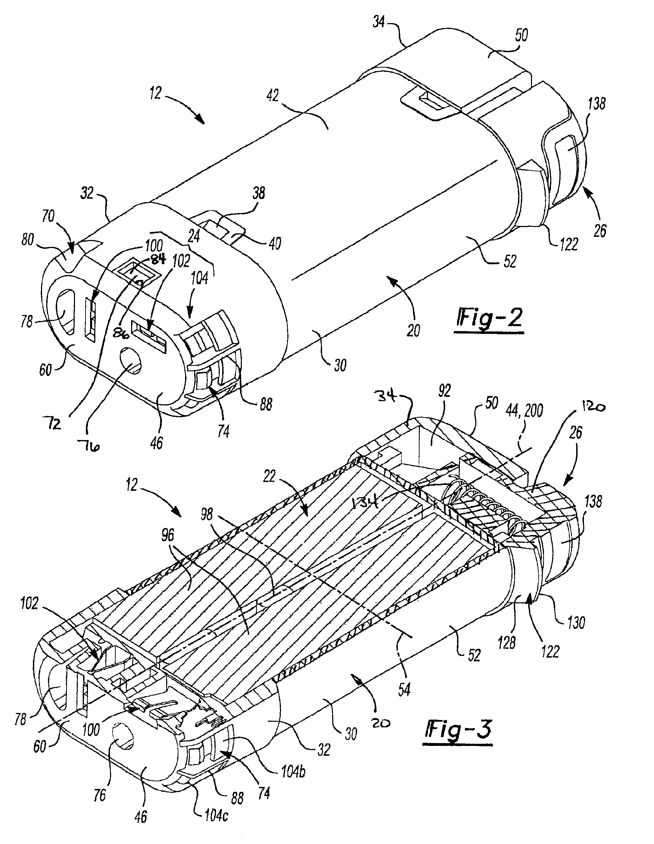

With reference to Figures 2 and 3, the battery pack 12 can include a pack housing 20, a battery assembly 22, a set of battery terminals 24 and a latch 26. The pack housing 20 can include a body member 30 and first and second end caps 32 and 34, respectively, that can be coupled together to enclose the battery assembly 22. The first and second end caps 32 and 34 can be coupled to the body member 30 in any convenient manner, such as tabs 38 that can be formed on the body member 30 and resilient hooks 40 that can be formed on the first and second end caps 32 and 34. It will be appreciated that the pack housing 20 could be configured differently, such as via a pair of clam shell half members (not shown) that are coupled to one another.

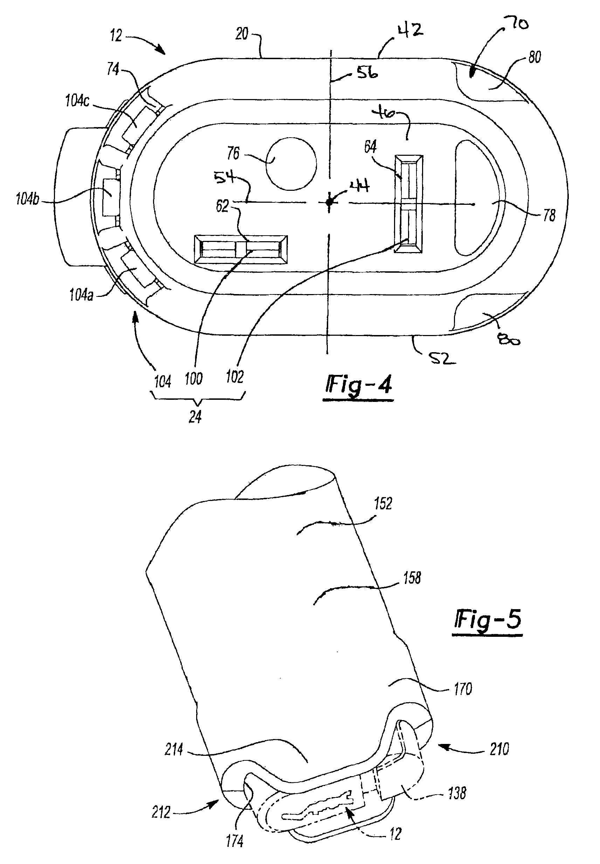

The pack housing 20 can have a sidewall 42, which can extend along a longitudinal axis 44 of the pack housing 20, a first end wall 46, which can be coupled to a first end of the sidewall 42, and a second end wall 50 that can be coupled to the sidewall 42 on a side opposite the first end of the sidewall 42. The pack housing 20 can have a substantially ovoidal cylindrical shape with an exterior surface 52 having a cross-sectional shape that is symmetric about a major axis 54 and a minor axis 56. For example, the pack housing 20 can have a cross-sectional shape with an exterior surface 52 that is shaped as a rounded rectangle. With additional reference to Figure 4, the first end wall 46 can be generally perpendicular to the longitudinal axis 44 of the pack housing 20 and can define a substantially ovoidal surface 60 with a first terminal opening 62 and a second terminal opening 64. The first and second terminal openings 62 and 64 can be discrete linear slots formed through the first end wall 46 that are disposed inwardly of (and do not intersect) the exterior perimeter of the substantially ovoidal surface 60. The first terminal opening 62 can be generally parallel to and spaced apart from the major axis 54, while the second terminal opening 64 can be generally parallel to the minor axis 56. In the particular example provided, the first and second terminal openings 62 and 64 are spaced apart from one another and the second terminal opening 64 is disposed symmetrically about the major axis 54.

The first end cap 32 can include one or more one or more lock-out features 70, one or more clipping features 72 and a plurality of spring terminal openings 74. The lock-out feature(s) 70 can comprise a projection or depression of any desired shape, such as a cylindrical depression 76, a semi-cylindrical depression 78 and/or one or more notches 80 that are formed into the first end cap 32 parallel to the longitudinal axis 44 of the battery pack 12. The clipping features 72 can comprise one or more recesses 84 that can be formed in the sidewall 42 and can define a ledge 86. The spring terminal openings 74 can be located in any convenient location. In the particular example provided, the spring terminal openings 74 comprise a plurality of grooves 88 that are formed into the sidewall 42 symmetrically about the major axis 54.

With renewed reference to Figures 2 and 3, the second end cap 34 can be coupled to the body member 30 in a manner that is similar to the manner in which the first end cap 32 is coupled to the body member 30. The second end cap 34 can define a latch actuator recess 92. The latch actuator recess 92 can be formed in an end of the pack housing 20 opposite the substantially ovoidal surface 60.

With reference to Figure 3, the construction of the battery assembly 22 is beyond the scope of the present disclosure and need not be described in significant detail herein. Briefly, the battery assembly 22 can include a pair of battery cells 96 and a thermistor 98. The battery cells 96 can be coupled together in an appropriate manner (e.g., in series) and can have a desired battery chemistry, such as a lithiumion battery chemistry. The thermistor 98 can be disposed in close proximity to the battery cells 96 to thereby receive heat that is generated by the battery cells 96 when the battery pack 12 is being charged and/or discharged.

With reference to Figures 2 through 4, the set of battery terminals 24 can include a first pack terminal 100, a second pack terminal 102 and a plurality of third pack terminals 104. In the particular example provided, the first and second pack terminals 100 and 102 are female terminals that are configured to receive a male blade terminal therein, while the third pack terminals 104 are cantilevered leaf spring-type terminals that are configured to abut a corresponding terminal in the battery charger 18 (Fig. 1), for example. In the particular example provided, the first pack terminal 100 is electrically coupled to the negative terminal (not shown) of the battery assembly 22, the second pack terminal 102 is electrically coupled to the positive terminal (not shown), a first one 104a of the third pack terminals 104 is electrically coupled to the thermistor 98, a second one 104b of the third pack terminals 104 is electrically coupled to a device that identifies the battery pack 12 (e.g., an identification integrated circuit, resistor and/or diode), and a third one 104c of the third pack terminals 104 is electrically coupled to one of the battery cells 96 to provide an inter-cell voltage tap. The first and second pack terminals 100 and 102 are disposed in-line with the first and second terminal openings 62 and 64, respectively, while the third pack terminals 104 are received into the spring terminal openings 74. The pack housing 20 can be employed to fix the first, second and third pack terminals 100, 102 and 104 at desired locations. For example, the pack housing 20 can be configured such that the first and second pack terminals 100 and 102 are received in (and captured by) the first and second terminal openings 62 and 64.

With specific reference to Figure 3, the latch 26 can have a latch body 120 and a tang 122 that can extend outwardly from the latch body 120. A stop member 124 can be formed on the latch body 120. The tang 122 can include a tapered leading surface 128 and an abutting edge 130. The latch 26 can be received in the latch actuator recess 92 such that the tang 122 is positioned to extend outwardly from the sidewall 42 of the pack housing 20. A spring 134 can be employed to bias the latch member outwardly from the latch actuator recess 92. The stop member 124 can contact the body member 30 of the pack housing 20 to limit outward movement of the latch 26. A grip portion 138 can be coupled to the latch body 120 to provide a comfortable means for selectively moving the tang 122.

With renewed reference to Figure 1, the first tool 14 can be any type of tool having a relatively substantial housing 150 with a handle 152. For example, the first tool 14 can be a screwdriver with a motor and transmission assembly 154, an output member 156 that can be driven by the motor and transmission assembly 154, and a battery connection portion 158.

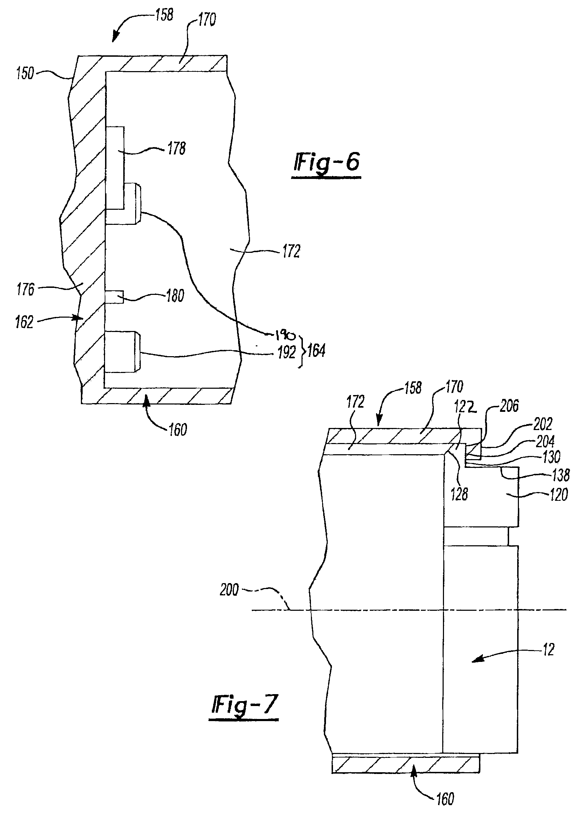

With reference to Figures 5 and 6, the battery connection portion 158 can include a housing member 160, a terminal block 162 and a plurality of mating lock-out features 164. The housing member 160 can include a wall member 170 that can be integrally formed with the housing 150. In the example provided, the wall member 170 defines a portion of the handle 152, as well as a battery chamber 172 with an ovoidal opening 174 that is configured to receive the battery pack 12 therein. The terminal block 162 can include a block member 176 and first and second tool terminals 178 and 180, respectively, that can be mounted in the block member 176. The first and second tool terminals 178 and 180, which can be male blade terminals, can extend into the battery chamber 172 by a first distance. The first and second tool terminals 178 and 180 can be configured to be received through the first and second terminal openings 62 and 64 (Fig. 4), respectively, and electrically engage the first and second pack terminals 100 and 102 (Fig. 4), respectively, when the battery pack 12 is fully received into the battery chamber 172.

In the particular example provided, the mating lock-out features 164 comprise a first projection 190 that is configured to be received in the cylindrical depression 76 (Fig. 4) and a second projection 192 that is configured to be received in the semi-cylindrical depression 78 (Fig. 4). The first and second projections 190 and 192 extend into the battery chamber 172 by a second distance that is greater than the first distance. Accordingly, if the battery pack 12 were to be fitted into the battery chamber 172 in the wrong orientation, contact between the mating lock-out features 164 and the pack housing 20 (Fig. 4) inhibits contact between the first and second tool terminals 178 and 180 and the pack housing 20.

With reference to Figure 7, contact between the tapered leading surface 128 of the tang 122 and the housing member 160 as the battery pack 12 is inserted into the battery chamber 172 along an insertion axis 200 pushes the tang 122 inwardly toward the insertion axis 200 to permit the tang 122 to pass through the exterior surface 202 of the housing member 160. Alignment of the tang 122 to a tang recess 204 in the housing member 160 after the first and second tool terminals 178 and 180 (Fig. 5) have been matingly engaged to the first and second pack terminals 100 and 102 (Fig. 4), respectively, permits the tang 122 to move outwardly from the pack housing 20 due to the spring 134 (Fig. 3) so that the abutting edge 130 of the tang 122 abuts a corresponding edge 206 of the tang recess 204. The grip portion 138 of the latch body 120 may be moved in a direction that is parallel to a plane that extends longitudinally through the battery pack 12 that includes the major axis 54 and the insertion axis 200 and which is perpendicular to the minor axis 56 to retract the tang 122 toward the sidewall 42 to thereby disengage the tang 122 from the housing member 160 so that the battery pack 12 may be withdrawn from the battery chamber 172. To further facilitate withdrawal of the battery pack 12, the housing member 160 can be recessed at a first location 210 (Fig. 5), which corresponds to the location of the grip portion 138 when the battery pack 12 is inserted into the battery chamber 172, and a second location 212 (Fig. 5) that can be disposed opposite the first location 210. The housing member 160 may otherwise shroud the battery pack 12. For example, the housing member 160 may include wing portions 214 (Fig. 5) that extend to or beyond the second end of the battery pack 12 when the battery pack 12 is fully installed to the housing member 160.

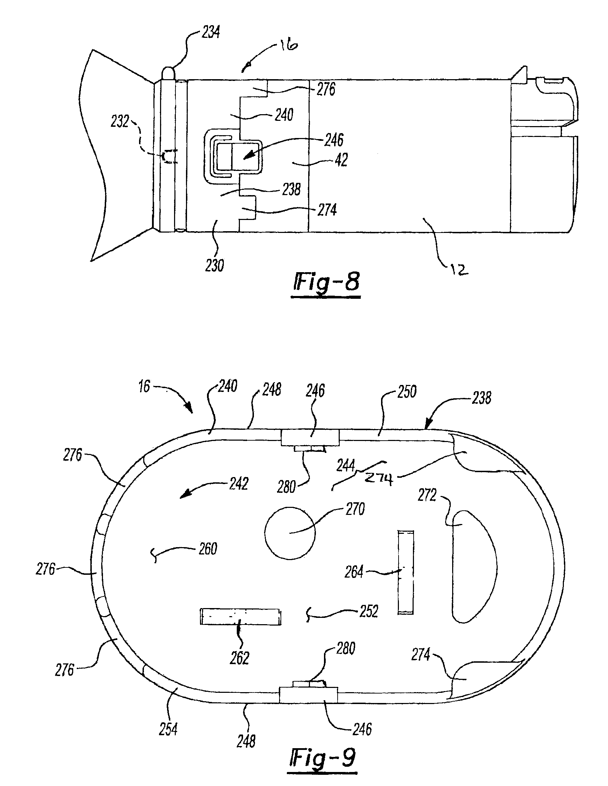

With reference to Figure 8, the second tool 16 can be any type of tool having a relatively insubstantial housing 230 that does not include a handle. For example, the second tool 16 can be a flash light having a light source 232, a switch 234 and a battery connection portion 238.

In Figure 9, the battery connection portion 238 can include a housing member 240, a terminal block 242, a plurality of mating lock-out features 244 and a pair of latch members 246 that can be movably coupled to opposite sides 248 of the housing member 240. The housing member 240 can include a wall member 250 that can define a battery recess 252 with an opening 254 that is configured to receive the battery pack 12 therein (Fig. 8). The terminal block 242 can include a block member 260 and first and second tool terminals 262 and 264, respectively, that can be mounted in the block member 260. The first and second tool terminals 262 and 264, which can be male blade terminals, can extend into the battery recess 252 by the first distance (similar to the configuration of the first tool 14 described above). The first and second tool terminals 262 and 264 can be configured to be received through the first and second terminal openings 62 and 64 (Fig. 4), respectively, and electrically engage the first and second pack terminals 100 and 102 (Fig. 4), respectively, when the battery pack 12 is received into the battery recess 252. In the particular example provided, the mating lock-out features 244 comprise a first projection 270, which is configured to be received in the cylindrical depression 76 (Fig. 4), a second projection 272, which is configured to be received in the semi-cylindrical depression 78 (Fig. 4), a set of third projections 274, which are configured to be received in the notches 80 (Fig. 4), and a set of fourth projections 276 that are configured to be aligned to the spring terminal openings 74 (Fig. 4). The first and second projections 270 and 272 can extend into the battery recess 252 by a second distance that is greater than the first distance (similar to the configuration of the first tool described above). The third projections 274 and fourth projections 276 can be sized to require alignment between the second tool 16 and the battery pack 12 before the battery pack 12 is received into the battery recess 252. The latch members 246 can include a latch tang 280 that can releasably engage the recesses 84 (Fig. 2) in the sidewall 42 (Fig. 2) to thereby couple the second tool 16 to the battery pack 12 (Fig. 8).

It will be appreciated that while the latching of the second tool 16 to the battery pack 12 is robust, it is nonetheless somewhat more delicate than the latching of the first tool 14 to the battery pack 12. Accordingly, the asymmetric orientation of the first and second pack terminals 100 and 102 (Fig. 4) can help to stabilize the connection between the second tool 16 and the battery pack 12 (Fig. 8). For example, the orientation of the first pack terminal 100 (Fig. 4) can render the first pack terminal 100 (Fig. 4) somewhat more resistant to bending than the second pack terminal 102 (Fig. 4) in response to a load applied to the second tool 16 in a direction parallel to the major axis 54 (Fig. 3). Similarly, the orientation of the second pack terminal 102 (Fig. 4) can render the second pack terminal 102 (Fig. 4) somewhat more resistant to bending than the first pack terminal 100 (Fig. 4) in response to a load applied to the second tool 16 in a direction parallel to the minor axis 56 (Fig. 3).

Aside from the connection to the battery pack 12, the battery charger 18 (Fig. 1) can be configured in a conventional manner and as such, the components of the battery charger 18, such as its charging circuit, need not be discussed in detail herein. With reference to Figure 1, the battery charger 18 can include a housing 300 that can have a battery connection portion 302 that can be similar to the battery connection portion 158 of the first tool 14, except that the battery connection portion 302 can include one or more auxiliary terminals (not shown) that can be electrically coupled to the spring terminals 104 (Fig. 4) when the battery pack 12 is inserted into the battery connection portion 302.

While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, the mixing and matching of features, elements and/or functions between various examples is expressly contemplated herein so that one of ordinary skill in the art would appreciate from this disclosure that features, elements and/or functions of one example may be incorporated into another example as appropriate, unless described otherwise, above. Moreover, many modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out this invention, but that the scope of the present disclosure will include any embodiments falling within the foregoing description and the appended claims.

## Claims

1. A battery pack comprising:
a housing including a substantially ovoidal surface which is substantially symmetric about a first axis of symmetry and a second axis of symmetry which is transverse to said first axis, said surface having first and second substantially linear terminal openings, said first opening extending substantially parallel to and non-coincidental with said first axis and said second opening extending substantially parallel to said second axis;
at least one battery cell contained within said housing;
a first terminal and a second terminal disposed within said housing adjacent to said surface, said first terminal accessible through first opening and said second terminal accessible through said second opening.

2. A battery pack according to claim 1, said first axis comprising a major axis and said second axis comprising a minor axis.

3. A pack according to claim 1 or claim 2, said second opening extending non-coincidental to said minor axis.

4. A battery pack according to any preceding claim, said first axis comprising a minor axis and said second axis comprising a major axis.

5. A battery pack according to any preceding claim, the ovoidal surface comprising a rounded rectangle.

6. A battery pack according to any one of claims 1 to 4, the ovoidal surface comprising an oval.

7. A battery pack according to any preceding claim, said surface having a lockout opening, wherein said lockout opening is not intersected by at least one of said first axis and said second axis.

8. A battery pack according to any preceding claim, said housing extending in a longitudinal direction which is substantially perpendicular to said surface and having an ovoidal cross-sectional shape for at least a portion of its dimension in the longitudinal direction.

9. A battery pack according to any preceding claim, said housing extending in a longitudinal direction which is substantially perpendicular to said surface and having an ovoidal cross-sectional shape for substantially its entire dimension in the longitudinal direction.

10. An electrical device for use with a battery pack according to any preceding claim.

11. An electrical device according to claim 10, wherein the electrical device is a battery charger.

12. An electrical device according to claim 10, wherein the electrical device is a power tool.
